Europäisches Patentamt

European Patent Office

Office européen des brevets

(11) Numéro de publication: **0 329 549 B2**

(12) # NOUVEAU FASCICULE DE BREVET EUROPEEN

(45) Date de publication de nouveau fascicule du brevet: **02.11.94**

(51) Int. Cl.5: **F16L 59/02**

(21) Numéro de dépôt: 89400415.9

(22) Date de dépôt: **15.02.89**

(54) Mat isolant pour corps à surface courbe, en particulier pour tuyaux et utilisation.

(30) Priorité: **19.02.88 DE 3805269**

(43) Date de publication de la demande:
**23.08.89 Bulletin 89/34**

(45) Mention de la délivrance du brevet:
**22.01.92 Bulletin 92/04**

(45) Mention de la décision
concernant l'opposition:
**02.11.94 Bulletin 94/44**

(84) Etats contractants désignés:
**AT BE CH DE ES FR GB IT LI LU NL SE**

(56) Documents cités:
**AT-A- 323 966         DE-A- 2 248 698
FR-A- 1 069 988      FR-A- 1 256 923
SE-B- 177 244        US-A- 4 025 680
US-A- 4 155 377      US-A- 4 823 845**

(73) Titulaire: **ISOVER SAINT-GOBAIN
Les Miroirs
18, avenue d'Alsace
F-92400 Courbevoie (FR)**

(72) Inventeur: **Roth, Klaus
Weinheimer Strasse 47
D-6805 Viernheim (DE)**

(74) Mandataire: **Le Vaguerèse, Sylvain Jacques
et al
SAINT-GOBAIN RECHERCHE
39, quai Lucien Lefranc
F-93300 Aubervilliers Cédex (FR)**

EP 0 329 549 B2

## Description

L'invention concerne un mat isolant pour des corps à surface courbe, en particulier pour tuyaux, comportant au moins une nappe support à laquelle sont reliées plusieurs bandes lamelliformes de matériau en fibres minérales disposées les unes à côté des autres et mutuellement parallèles pour former une couche isolante, l'orientation principale des fibres de chaque bande étant perpendiculaire au plan de la nappe support et les bandes présentant une consistance telle que l'adaptation à la courbure superficielle entraîne une diminution de la largeur des bandes par rapprochement réciproque des fibres du côté opposé à la nappe support. L'invention a trait également à l'utilisation de tels mats pour isoler des corps à surface au moins localement courbe tels des tuyaux.

Pour isoler des tuyaux au moyen d'un matériau en fibres minérales, on utilise habituellement des coquilles isolantes. Pour fabriquer de telles coquilles isolantes, on enroule un feutre de fibres minérales imprégné de liant autour d'un mandrin dont le diamètre correspond au diamètre intérieur du tuyau à isoler et on fait ensuite durcir le matériau par la prise du liant. On obtient de cette façon une coquille de forme stable qui présente un bon pouvoir calorifuge et une résistance relativement élevée à la compression. Des tuyaux isolés par de telles coquilles, par exemple des canalisations de chauffage urbain, présentent ainsi une surface stable qui peut être chargée, notamment sur laquelle on peut marcher.

Mais de telles coquilles isolantes doivent obligatoirement être préfabriquées pour un diamètre de tuyau déterminé et ne conviennent dès lors que pour ce diamètre. Ceci aboutit à la nécessité de disposer d'un grand assortiment de coquilles isolantes et à des frais d'entreposage considérables, ce qui limite la latitude d'utilisation de tels éléments isolants. De plus, les coquilles préfabriquées dans leur forme finale doivent également être entreposées et expédiées sous cette forme, d'où des volumes d'entreposage et de transport considérables. Pour utiliser de telles coquilles dites complètes, il est de plus nécessaire que le tuyau à isoler soit accessible par un bout pour faire glisser la coquille par ce bout. Pour permettre un montage latéral - notamment pour des isolations après coup - on propose également des coquilles complètes refendues ou des demi-coquilles ou encore d'autres segments adéquats de coquilles. Mais la forme préfabriquée des coquilles suscite dans tous les cas des difficultés lors d'une 'utilisation dans des espaces restreints, comme des cages ou espaces analogues, en raison de l'encombrement de telles coquilles. Le montage des coquilles sur le tuyau exige dans les environs du tuyau une liberté de mouvement fréquemment non disponible.

De plus, l'application des coquilles isolantes n'est possible que sur des tuyaux ronds et non par exemple sur des conduits rectangulaires.

Pour isoler des surfaces au moins partiellement courbées, on connaît, en outre, des mats dits à lamelles, qui sont fabriqués par application et fixation sur une nappe support de bandes individuelles. La nappe support est par exemple une feuille mince de treillis d'aluminium. Les bandes individuelles ou "bandes lamelliformes" sont dans un matériau en fibres minérales, les fibres des bandes individuelles étant orientées, dans leur direction principale préférentielle, perpendiculairement au plan de la nappe support, comme cela est décrit dans le brevet US-A-4,823,845, publié le 25 avril 1989. Grâce à la fixation des bandes sur la nappe support - qui se trouve au côté extérieur de la courbure - la largeur des bandes en cet endroit est fixée, tandis que la consistance des bandes est choisie telle que, pour le rayon de courbure envisagé, une légère compression correspondante des bandes soit obtenue du côté opposé à la nappe support.

Les fibres sont ainsi rapprochées les unes des autres perpendiculairement à leur orientation et la largeur des bandes est de cette manière localement réduite sans forces de rappel sensibles et sans déformations ou pliages des fibres. L'ensemble du mat isolant acquiert ainsi une nature relativement flexible.

Le même produit isolant peut ainsi servir à l'isolation de tuyaux de diamètres différents. De plus, on peut isoler des éléments de courbures différentes, comme par exemple des conduits de conditionnement d'air, le mat s'adaptant en effet sans problème à tout rayon de courbure rencontré.

Toutefois, on ne peut dans tous les cas substituer de tels mats à lamelles aux coquilles isolantes car ceux-ci présentent une capacité de charge en compression nettement plus faible que celle des coquilles isolantes. On peut certes tenter d'augmenter la capacité de charge en compression des mats à lamelles, mais à mesure que l'on augmente la densité apparente, la teneur en liant s'accroît et les bandes deviennent de ce fait plus rigides au niveau de leur côté opposé à la nappe support. Par conséquence, les forces de rappel deviennent sensibles lorsqu'on rapproche les fibres pour adapter le mat au rayon de courbure de l'élément à isoler.

Il est également connu du brevet autrichien OE-323 966 un mat isolant plus particulièrement destiné au coffrage du béton et constitué d'une nappe-support sur laquelle sont collées des bandes de laine minérale présentant une forte rigidité et dont les fibres sont orientées perpendiculairement au plan de la nappe-support. Les bandes sont assemblées les unes aux autres à l'aide de minces joints eux-mêmes en matériau isolant mais plus compressibles.

L'invention a pour but d'augmenter notablement la résistance à la compression du mat isolant, du type à lamelles décrit précédemment, tout en conservant la consistance des bandes assurant la flexibilité exigée du mat isolant.

L'invention propose un mat isolant selon la revendication 1.

Comme on intercale entre les bandes à faible résistance à la compression des nervures de support de plus haute résistance à la compression, la nappe support dispose, au niveau de ces nervures de support, d'un soutien à l'égard des forces de compression exercées, de sorte que l'ensemble du mat devient apte à être chargé en compression à partir de son côté extérieur. La bonne flexibilité du mat isolant est garanti par les bandes lamelliformes à faible compressibilité dans le sens circonférentiel disposées entre les nervures de support.

Il est certes déjà connu, notamment du brevet US-A-4,025,680, des mats lamellaires entre les bandes desquels on dispose un matériau d'un autre type mais cependant en fibres minérales, avec toutefois et contrairement à l'invention une direction principale des fibres parallèle à la nappe support, donc moins résistante en compression, de sorte que le mat ainsi réalisé présentant une résistance à la compression encore plus faible que celle des bandes lamelliformes "classiques". En outre la fabrication d'un tel mat isolant est plus onéreuse car les bandes à orientations alternées des fibres ne peuvent être posées et fixées qu'individuellement sur la nappe support.

Selon une caractéristique de l'invention, les nervures de support sont formées par des bandes en matériau de fibres minérales dont l'orientation principale des fibres est également perpendiculaire au plan de la nappe support, mais qui, en raison de leur consistance différente, présentent une résistance élevée à la compression. Lorsqu'un matériau en fibres minérales est également utilisé pour les nervures de support, la diminution du pouvoir calorifuge par rapport à celle d'un mat lamellaire classique reste faible. Du fait que l'orientation principale des fibres des nervures de support est également perpendiculaire au plan de la nappe support et dès lors à la surface à isoler, ces fibres contribuent elles-mêmes par leur orientation à l'amélioration de la résistance à la compression, de sorte que d'autres paramètres peuvent être optimisés pour conserver le pouvoir calorifuge.

La résistance à la compression du matériau utilisé pour les nervures du support est de préférence supérieure à 10 kN par m² et même à 50 kN par m².

De façon avantageuse, les bandes formant les nervures de support sont fabriquées en fibres de roche, tandis que les bandes lamelliformes sont de manière habituelle constituées de fibres de verre. Ceci conduit à des différences marquées dans la coloration des bandes, de sorte qu'un tel mat selon l'invention se distingue d'un coup d'oeil de mats à lamelles classiques moins résistants à la compression. De plus les fibres de roche sont moins onéreuses que les fibres de verre ; leur utilisation pour les nervures de support diminue donc le coût des matériaux servant à la fabrication du mat.

Pour une bonne adaptation à tous les cas rencontrés, il est avantageux que les nervures de support aient des largeurs différentes de celles des bandes lamelliformes. Ceci donne une plus grande aire de support à l'égard des forces de compression qui est particulièrement intéressante lorsque la nappe support est elle-même flexible et ne peut donc transmettre que dans une faible mesure les forces de compression apparaissant entre les bandes de support par résistance à la flexion aux bandes de support voisines. On obtient de bons résultats avec des bandes lamelliformes dont la largeur est comprise entre 10 et 20 mm (de préférence de 10 mm), et des nervures de support de 20 à 40 mm de large (de préférence de 30 mm) ce qui donne un corset finement réticulé par les nervures de support. Même si la nappe support est réalisée dans un matériau extrêmement flexible, seules des charges ponctuelles du type piqûre peuvent rencontrer un support insuffisant dans la région des bandes lamelliformes, tandis que des charges de compression sur des surfaces de la grandeur d'un jeton peuvent être immédiatement supportées par les nervures de support sans charger les bandes lamelliformes. Des charges habituelles de compression sont supportées simultanément par un grand nombre de nervures de support.

Il est ainsi possible de garantir dans les cas d'application typiques des mats dits à lamelles, une capacité de charge en compression nettement accrue. Non seulement, on diminue les risques d'endommagement de l'isolation mais de plus cas mats à lamelles selon l'invention peuvent être utilisés dans des cas d'application nécessitant une capacité de charge en compression plus grande.

De plus, il existe de nombreux cas d'application pour lesquels on peut se contenter de matériaux isolants moins onéreux, comme des mats dits à fils (c'est-a-dire des feutres de fibres minérales piqués au moyen d'un fil métallique sur un treillis métallique galvanisé et livrés sous forme de rouleaux), mais pour lesquels des structures de support supplémentaires sont cependant nécessaires.

Il en est ainsi par exemple lorsqu'on doit isoler une conduite tubulaire constituée d'un tuyau central d'un diamètre supérieur à 100 mm ou d'épaisseur d'isolation supérieur à 50 mm (selon les normes DIN 18421, DIN 4140, partie 1) et d'une enveloppe extérieure par exemple en tôle, espacée d'une certaine distance du tuyau central. Dans l'espace ménagé entre les tuyau central et l'enveloppe en tôle, on dispose des mats en fils. La position réciproque du tuyau central et de l'enveloppe doit être assurée par des structures de support telles que des anneaux en étoile supportés sur le tuyau central ; ces anneaux sont constitués de métal ou pour éviter les ponts thermiques de matériaux céramiques, toutefois plus onéreux. De plus, dans certains cas impliquant par exemple des tuyaux centraux à mode de fonctionnement chaud et froid intermittent, il faut prévoir pour l'isolation proprement dite - disposée autour du tuyau central sous forme par exemple de coquilles - un espace de ventilation afin d'éviter les accumulations d'eau de condensation. Cet espace de ventilation est par exemple obtenu par l'utilisation en lieu et place des anneaux en étoile d'une tôle ondulée à ondulations axiales, disposée entre l'enveloppe extérieure et la face externe de l'isolation.

Dans de tels cas d'application, on peut utiliser un mat isolant conforme à l'invention comme dispositif d'entretoisement local entre l'enveloppe extérieure rigide et la structure isolante. Dans ce cas, la fonction principale du mat n'est pas l'isolation, qui est assurée pour l'essentiel par les mats en fils, mais la réalisation de structures de support, fonction pour laquelle sa résistance à la compression et sa capacité d'adaptation à tout contour souhaité peuvent être exploitées. Notons toutefois que le pouvoir isolant du mat reste un avantage important même dans un tel cas, car on évite des ponts thermiques à travers la structure du support. Si un échange d'air axial est nécessaire dans la région du support, on peut soit utiliser la perméabilité à l'air relativement bonne des bandes lamelliformes, en particulier du côté de la nappe de support, soit prévoir des interstices libres entre des mats isolants courts disposés par segments. La largeur des mets isolants utilisés dépend des forces à absorber à l'endroit en question et n'est pas critique du fait du bon pouvoir calorifuge.

On peut ainsi disposer des bandes plus ou moins larges de mets à lamelles directement entre la surface du corps à isoler - par exemple le tuyau central - et l'enveloppe extérieure et remplir au moyen d'un autre metériau isolant l'espace axial subsistent entre les zones de support. D'une manière particulièrement préférée, cet espace axial entre le corps à isoler et les mats isolants est rempli par un matériau qui sert de support intérieur aux mets isolants selon l'invention - par exemple sous formes de coquilles - en ne laissant subsister qu'un interstice de ventilation vers l'enveloppe extérieure.

Les mats isolants selon l'invention ne sont généralement pas destinés à se substituer aux mets lamellaires classiques qui permettent une meilleure isolation thermique à moindre frais - sauf bien entendu dans les cas où une résistance à la compression accrue est souhaitée. Cependant, un mat isolant conforme à l'invention peut être avantageusement utilisé comme couche isolante et en même temps, comme support résistent à la compression pour une enveloppe extérieure rigide d'une structure isolante. Dans ce type d'application, les mets isolants conformes à l'invention peuvent remplacer dans une grande mesure les gaines isolantes tubulaires classiques.

D'autres perticularités et caractéristiques avantageuses de l'invention ressortent de la description donnée ci-après en référence aux dessins annexés qui représentent :

- **figure 1** : une vue en coupe partielle d'un mat isolent conforme à l'invention mis à plat,
- **figure 2** : une vue du mat isolant correspondant à celle de la figure 2, en position fortement courbée sur une surface à isoler,
- **figure 3** : une vue en perspective d'une section de tuyau dans laquelle une pièce étroite d'un mat isolant conforme à l'invention est utilisée comme dispositif d'espacement local pour une enveloppe externe rigide de le structure du tuyau,
- **figure 4** : une vue semblable à la figure 3, dans une autre forme de réalisation.

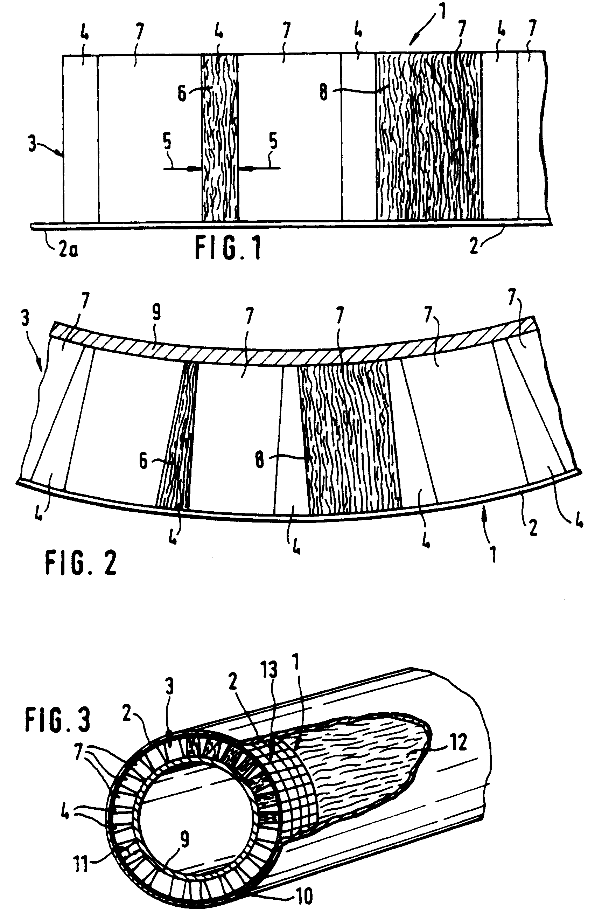

Comme le montre la figure 1, un mat isolant 1 conforme à l'invention comporte une nappe support 2 ayant par exemple la forme d'une feuille en treillis d'aluminium et une couche isolante 3 qui y est fixée, par exemple par collage.

La couche isolante 3 présente des bandes 4 mutuellement parallèles disposées les unes à côté des autres, dites bandes lamelliformes qui sont légèrement compressibles sous l'effet d'une charge dans le sens de la flèche 5. A cet effet, les bandes 4 ont une résistance à la compression relativement faible, par exemple de 3 kN par $m^2$ et sont disposées d'une manière telle que l'orientation principale des fibres minérales 6 soit perpendiculaire au plan de la nappe support 2.

Comme le montre plus particulièrement la figure 2, la compressibilité des bandes 4 permet, sous l'effet d'une charge exercée dans le sens de le flèche 5, une bonne flexibilité convexe pour la nappe support 2 disposée à l'extérieur. Etant donné que les bandes 4 sont reliées de manière permanente, par exemple par collage, à le nappe support 2 réalisée dans une substance non-élastique, leur largeur est fixée du côté de la nappe support 2. Lorsque le mat isolent 1 est courbé, les fibres minérales 6 peuvent être comprimées davantage perpendiculairement à la direction de leur orientation principale, du côté opposé à la nappe support 2, de sorte que les bandes 4 deviennent cunéiformes et peuvent accuser une largeur nettement inférieure à leur largeur du côté de la nappe support 2. Il s'agit là du principe fonctionnel des mets dits à lamelles classiques.

Dans les mets isolants 1 conformes à l'invention, les bandes 4 ne sont pas disposées immédiatement les unes à côté des autres pour former ensemble la couche isolante 3, mais on intercale entre-elles des nervures de support 7 qui remplacent les bandes 4 habituellement prévues à ces endroits. Dans un exemple de réalisation, les nervures de support 7 sont constituées de fibres de roche d'une résistance à la compression de 30 kN par m², l'orientation principale des fibres de roche 8 étant également perpendiculaire au plan de la nappe support 2. La résistance à la compression nettement supérieure des nervures de support 7 confère à ces dernières la consistance d'une plaque rigide. Cependant, la densité apparente nécessaire pour atteindre cette résistance à le compression et le teneuren agent liant correspondantes, ne sont pas trop élevées lorsque l'orientation principale des fibres est celle de la charge en compression, de sorte que les fibres de roche 8 sont principalement sollicitées en flambage. La résistance à le compression, perallèlement au plan de le nappe support 2 est nettement moindre, mais pas eu point de permettre une compression sensible du matériau constituent les nervures de support 7 dans le cas d'une flexion du mat isolant 1. Loin d'être un défaut, une telle compression ou diminution de le largeur du côté des nervures de support 7 opposé à le nappe support 2 serait d'ailleurs en principe souhaitable, mais en fait très difficilement réalisable, compte tenu de la priorité donnée à la résistance à la compression.

Le raccourcissement de la courbure du côté concave du mat isolant 1, nécessaire lors d'une flexion, résulte presque exclusivement de la compression cunéiforme des bandes 4, tandis que les nervures de support 7 conservent en substance leur forme rectangulaire. Les nervures de support 7 supportent cependant des forces de compression importantes apparaissent du côté convexe de la nappe support 2 et protègent ainsi les bandes 4 de moindre résistance à le compression.

Pour obtenir d'une part une quasi-homogénéité de l'effet de la compression sur la surface de la nappe support 2 et d'autre part une bonne capacité de flexion du mat isolant 1, on fait alterner des bandes 4 relativement minces avec des nervures de support 7 également relativement minces. Dans le cas retenu à titre d'exemple, la largeur des bandes 4 est d'environ 10 mm (mesurée lorsque les bandes 4 ne sont pas en charge comme à la figure 1) et celle des nervures de support 7 de 30 mm pour une hauteur de couche isolante 3 d'environ 50 mm. En supposant que, dans le ces d'une flexion du mat isolent 1, le côté intérieur concave des bandes 4 ne puisse en substance pas être comprimé au-delà de le moitié environ de la largeur de ces bandes 4 du côté de la nappe support 2, l'isolation peut être appliquée sans difficulté suivant un rayon de courbure minimum d'environ 300 mm. En diminuent la largeur des nervures de support 7 - pour une même épaisseur de la couche isolante 7 - on a une possibilité d'adaptation du mat 1 à des rayons de courbure encore plus petits. Pour des épaisseurs d'isolation moindres, des rayons de courbure plus petits peuvent être réalisés sens modification des rapports entre les largeurs des bandes 4 et des nervures de support 7.

Ainsi, suivent la largeur et la répartition des bandes 4 et des nervures de support 7 et suivent le degré de compression admissible du matériau des bandes 4 du côté interne concave, on obtient un rapport "v" entre la périphérie externe et le périphérie interne minima admissible du mat isolant courbé. Si "r" représente le rayon de courbure de la surface à isoler et "d" l'épaisseur d'isolation souhaitée, les relations géométriques entre ces grandeurs donnent l'équation :

d = r(v-1)

Ainsi, si le pièce à isoler présente un rayon de courbure "r" de 300 mm, l'épaisseur d'isolation maximum est de 43 mm si on utilise un mat 1 conforme à l'invention dont le rapport "v" est de 40/35. Dans la pratique, on peut associer à chaque rayon de courbure "r' des diagrammes correspondants à l'épaisseur d'isolation maximum "d", en fonction de la nature du mat isolent 1 en tenant compte du pouvoir calorifuge et de la résistance à la compression exigée.

De manière évidente, le mat isolant 1 selon l'invention peut être utilisé dans tous les cas d'application connus des mets à lamelles. Toutefois, il convient de préférence à des domaines d'application dans lesquels sa plus grande résistance à la compression est exigée.

De plus, le mat isolant 1 convient à des cas où l'exigence primaire n'est pas le pouvoir calorifuge, mais la résistance à le compression. Dans de tels cas, le mat isolant 1 peut remplacer un élément de support mécanique, son pouvoir isolant excluant totalement le risque de formation de ponts thermiques.

Un tel exemple d'application est illustré figure 3. La paroi du corps à isoler, indiquée en 9 sur le figure 2, est ici celle d'un tuyau central entouré d'une enveloppe extérieure 10 en tôle. Dans l'espace 11 ménagé entre le tuyau central 9 et l'enveloppe 10, on a disposé un matériau isolant 12, ici des mets de fils. L'espace 11 est protégé au moyen d'un dispositif de support 13, car les mets de fils ont une résistance à le compression relativement faible. Les supports habituels en métal ou en céramique sont ici remplacés par un élément formé par le mat isolent 1. A cette fin, le mat isolent 1 est disposé autour du tuyau central, à l'endroit où on désire placer un support 13, l'enveloppe en tôle 10 reposent sur la face extérieure de la nappe support 2. Le dispositif de support 13 ainsi formé est extrêmement intéressant du point de vue économique et est de plus préférable à tous les supports solides usuels du fait de son pouvoir isolant. Grâce à le bonne répartition de charge des forces de compression assurée par l'enveloppe extérieure rigide 10, il n'est pas nécessaire de prévoir une répartition finement réticulée de nervures de support 7 minces. On peut ainsi utiliser des bandes 4 de le largeur habituelle - par exemple, de l'ordre de 50 mm ou davantage - et des nervures de support 7 de largeur correspondante.

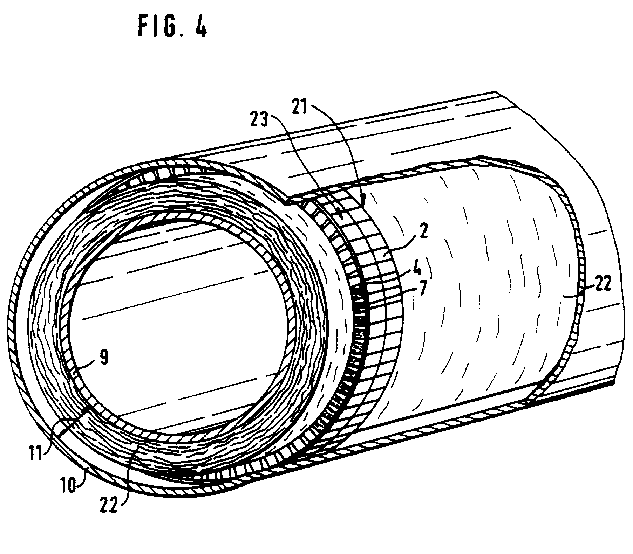

En dehors de cette utilisetion comme support annulaire fermé entre le paroi 9 du corps à isoler et l'enveloppe extérieure 10, un mat isolant 21 conforme à l'invention peut également servir, comme montré à la figure 4, à former un dispositif de support 23 dans tous les cas où il faut maintenir une ventilation autour d'une isoletion 22 déjà en place et donnant satisfaction du point de vue de sa résistance à le compression - par exemple du type coquilles. Le mat isolent 21 peut alors être réalisé en une épaisseur moindre et être disposé sur la face externe de l'isolation 22 et le face interne de l'enveloppe extérieure 10. La faible épaisseur d'isolation du mat isolent 21 permet ici une bonne flexibilité suivent des rayons de courbure particulièrement petits et par conséquent une utilisation sur des tuyaux très minces ou sur des bords relativement vifs. La consistance même du mat 21 suffit à satisfaire le plupart des exigences de perméabilité axiale à l'air, ceci notamment grâce à la présence d'une matière plus légère qui présente une certaine perméabilité à l'air dans le région des bandes 4 au voisinage de le nappe support 2. En lieu et place d'un mat isolent 21 annulaire fermé (ou du mat isolent 1 de l'exemple de réalisation précédent) et pour former le dispositif de support 13 ou 23, on peut disposer plusieurs sections longitudinales individuelles du mat isolent 1 ou 21, en les répartissant par segments sur la périphérie, et en ménageant entre les éléments individuels des interstices permettant un échange d'air. Lors du montage, de tels segments du mat isolent 1 ou 21 peuvent être assujettis, par exemple par collage, de sorte que ces éléments du mat isolent 1 ou 21 sont répartis sur la périphérie de la paroi 9 ou de l'isolation 22 comme des cales de pression.

Lorsque le mat 1 de la figure 2 est essentiellement utilisé à titre d'isolation - et remplace une coquille isolante - les nervures de support 7 présentent généralement une résistance à la compression de 10 à 50 kN par m², de préférence de 30 kN par m² et donnent dans le cas d'une répartition correspondante et d'une proportion correspondante sur l'ensemble de la couche isolante 3, une résistance à la compression du mat isolent 1 qui est généralement suffisante pour une bonne isoletion thermique. Pour former le dispositif de support 13 de le figure 3, on peut utiliser une ou plusieurs bandes du mat isolent 1 d'une largeur adéquate, ce qui permet d'atteindre une résistance à la compression suffisante grâce à la largeur de support correspondante. Cependant lorsqu'on utilise le mat isolent 1 de la figure 3, et en particulier le mat isolent 21 de le figure 4, on peut aussi utiliser des nervures de support d'une résistance à la compression plus élevée pouvant aller jusqu'à 100 kN par m² et davantage. A mesure que les forces de compression exercées sur le surface du mat isolent 21 sont transmises de manière plus régulière, par exemple, grâce à une structure rigide correspondante de l'enveloppe extérieure 10, il est possible de renoncer de plus en plus à une répartition homogène des nervures de support 7 et de n'atteindre la résistance à la compression que par augmentation de le résistance à la compression des nervures de support 7. On peut alors utiliser des bandes 4, ou des nervures de support 7 de plus grande largeur pour atteindre une résistance globale à la compression et conserver, dans la région des bandes 4, des zones de moindre résistance à le compression d'une largeur suffisamment faible pour répondre aux exigences du cas d'application envisagé.

Il ressort clairement de la description donnée ci-dessus que l'invention n'est pas limitée à le forme de réalisation représentée, mais que de nombreuses variantes et modifications sont permises sans sortir du cadre de l'invention. Ainsi, les bandes 4 ou les nervures de support 7 peuvent être constituées non d'une seule pièce mais de plusieurs éléments de bande ou de nervure juxtaposés, chaque élément pouvant avoir le même largeur. On peut aussi combiner des éléments pour donner des bandes 4 et des nervures de support 7 de largeurs différentes. De plus, les bandes 4 peuvent être constituées par d'autres fibres minérales que les fibres de verre. De même, les nervures de support 7 ne sont pas obligatoirement en laine de roche, car en principe convient n'importe quel matériau de support présentant des propriétés adéquates pour l'application envisagée. Enfin, en dehors des cas d'application déjà mentionnés, de nombreux domaines peuvent être envisagés dans lesquels les mats isolants 1 ou 21 ou de petites sections de dimensions quelconques de ceux-ci peuvent être utilisés comme corps flexibles supportent une charge de compression sous forme de cales ou bandes ou nappes ou autres et comme dispositifs d'espacement pouvant être chargés en compression, ces mets offrant alors, comparé à des éléments utilisés jusqu'à présent, un meilleur pouvoir calorifuge et éventuellement une meilleure tenue au feu ainsi qu'une meilleure adaptabilité aux contours des surfaces de support.

## Revendications

1. Mat isolant pour des corps présentant une surface courbe, en particulier pour tuyaux, comportant au moins une nappe support (2) à laquelle sont reliées plusieurs bandes lamelliformes (4) de matériau en fibres minérales disposées les unes à côté des autres et mutuellement parallèles pour former une couche isolante, l'orientation principale des fibres de chaque bande (4) étant perpendiculaire au plan de la nappe support (2) et les bandes (4) présentant une consistance telle que l'adaptation à la courbure superficielle entraîne une diminution de la largeur des bandes (4) par rapprochement réciproque des fibres du côté opposé à la nappe-support (2), des nervures de support (7) étant intercalées entre les bandes (4), lesdites nervures étant formées par des bandes matériau en fibres minérales dont les fibres (8) présentent également une orientation principale perpendiculaire au plan de la nappe-support (2), mais qui, du fait de leur consistance différente de celle des bandes (4), présentent une résistance à la compression accrue dans le sens perpendiculaire à la nappe support (2), **caractérisé en ce que** la largeur des bandes compressibles (4) est de 10 à 20 millimètres, de préférence 10 millimètres et celle des nervures-support (7) est de 20 à 40 millimètres, de préférence 30 millimètres.

2. Mat isolant suivant la revendication 1, **caractérisé en ce que** la résistance à la compression des nervures de support ( 7) est supérieure à 10 kN par m$^2$ et de préférence supérieure à 50 kN par m$^2$.

3. Mat isolant suivant la revendication 1 ou 2, **caractérisé en ce que** les bandes formant les nervures de support (7) sont en fibres de roche.

4. Mat isolant suivant l'une quelconque des revendications 1 à 4, **caractérisé en ce que** les nervures de support (7) ont des largeurs différentes de celles des bandes compressibles (4).

5. Mat isolant suivant la revendication 4, **caractérisé en ce que** les nervures de support (7) sont plus larges que les bandes compressibles (4).

6. Utilisation d'un mat isolant suivant l'une quelconque des revendications 1 à 5, comme dispositif d'espacement local (13) pour une enveloppe extérieure rigide (10) d'une structure isolante.

7. Utilisation suivant la revendication 6, **caractérisée en ce que** le mat isolant (1) est supporté par la face externe d'un autre matériau isolant (12).

8. Utilisation d'un mat isolant suivant l'une quelconque des revendications 1 à 6, comme couche isolante et en même temps, comme support résistant à la compression pour une enveloppe extérieure rigide (10) d'une structure isolante.

## Claims

1. Insulating mat for bodies having a curved surface, in particular for pipes, comprising at least one carrier web (2) to which there is connected a plurality of lamelliform strips (4) of mineral fibre material disposed adjacent one another and parallel to one another so as to form an insulating layer, the main orientation of the fibres of each strip (4) being perpendicular to the plane of the carrier web (2) and the strips (4) having a consistency such that the adaptation to the surface curvature reduces the width of the strips (4) by the fibres on the side opposite the carrier web (2) moving towards each other, supporting ribs (7) being interposed between the strips (4), said ribs being formed by strips of mineral fibre material of which the fibres (8) also have a main orientation perpendicular to the plane of the carrier web (2), but which, owing to their consistency which is different from that of the strips (4), have increased resistance to compression in the direction perpendicular to the carrier web (2), characterised in that the width of the compressible strips (4) is between 10 and 20 mm and is preferably 10 mm and that of the supporting ribs (7) is between 20 and 40 mm and is preferably 30 mm.

2. Insulating mat according to Claim 1, characterised in that the resistance to compression of the supporting ribs (7) is greater than 10 kN per m$^2$ and is preferably greater than 50 kN per m$^2$.

3. Insulating mat according to Claim 1 or 2, characterised in that the strips forming the supporting ribs (7) are made of rock fibres.

4. Insulating mat according to any one of Claims 1 to 3, characterised in that the supporting ribs (7) have widths different from those of the compressible strips (4).

5. Insulating mat according to Claim 4, characterised in that the supporting ribs (7) are wider than the compressible strips (4).

6. Use of an insulating mat according to any one of Claims 1 to 5, as a local spacing device (13) for a rigid external casing (10) of an insulating structure.

7. Use according to Claim 6, characterised in that the insulating mat (1) is supported by the external face of a further insulating material (12).

8. Use of an insulating mat according to any one of Claims 1 to 6, as an insulating layer and simultaneously as a compression-resistant carrier for a rigid external casing (10) of an insulating structure.

**Patentansprüche**

1. Dämmatte für Körper mit gekrümmter Oberfläche, insbesondere für Röhren, mit mindestens einer Stützbahn (2), mit welcher mehrere lamellenförmige, nebeneinander und parallel zueinander angeordnete Streifen (4) aus Mineralfasermaterial derart verbunden sind, daß sie eine Dammschicht bilden, wobei die Hauptausrichtung der Fasern in jedem Streifen (4) senkrecht zur Ebene der Stützbahn (2) ist und die Streifen (4) eine derartige Konsistenz aufweisen, daß die Anpassung an die Oberflächenkrümmung eine Verringerung der Breite der Streifen (4) mit sich bringt durch wechselseitige Annäherung der Fasern auf der der Stützbahn (2) gegenüberliegenden Seite, wobei die Stützrippen (7) zwischen den Streifen (4) angeordnet sind und die Rippen durch Streifen aus einem Mineralfasermaterial gebildet sind, dessen Fasern (8) ebenfalls eine senkrecht zur Ebene der Stützbahn (2) verlaufende Hauptausrichtung aufweisen, aber aufgrund ihrer Konsistenz, die von derjenigen der Streifen (4) unterschiedlich ist, in senkrechter Richtung zur Stützbahn (2) eine erhöhte Druckfestigkeit aufweisen,
**dadurch gekennzeichnet, daß**
die Breite der komprimierbaren Streifen (4) 10 bis 20 mm, vorzugsweise 10 mm beträgt, und die Breite der Stützrippen (7) 20 bis 40 mm, vorzugsweise 30 mm beträgt.

2. Dämmatte nach Anspruch 1, dadurch gekennzeichnet, daß die Druckfestigkeit der Stützrippen (7) höher als 10 kN/m² und vorzugsweise höher als 50 kN/m² ist.

3. Dämmatte nach Anspruch 1 oder 2, dadurch gekennzeichnet, daß die Streifen, welche die Stützrippen (7) bilden, aus Steinfasern bestehen.

4. Dämmatte nach einem der Ansprüche 1 bis 4, dadurch gekennzeichnet, daß die Stützrippen (7) Breiten aufweisen, welche unterschiedlich von denjenigen der komprimierbaren Streifen (4) sind.

5. Dammatte nach Anspruch 4, dadurch gekennzeichnet, daß die Stützrippen (7) breiter als die komprimierbaren Streifen (4) sind.

6. Verwendung einer Dämmatte nach einem der Ansprüche 1 bis 5 als Vorrichtung (13) zur örtlichen Beabstandung für eine starre Außenhülle (10) einer Dämmstruktur.

7. Verwendung nach Anspruch 6, dadurch gekennzeichnet, daß die Dämmatte (1) von der Außenfläche eines weiteren Dämmstoffes (12) getragen ist.

8. Verwendung einer Dämmatte nach einem der Ansprüche 1 bis 6 als Dämmschicht und gleichzeitig als druckfeste Unterlage für eine starre Außenhülle (10) einer Dämmstruktur.

FIG.1

FIG. 2

FIG.3

FIG. 4